# EUROPÄISCHE PATENTSCHRIFT

(11) **EP 4 705 145 B1**
(45) Veröffentlichungstag und Bekanntmachung des Hinweises auf die Patenterteilung: **10.06.2026**
(21) Anmeldenummer: 24721957.9
(22) Anmeldetag: 23.04.2024
(51) Int. Cl.: B60Q 1/14

(54) **KRAFTFAHRZEUG UND VERFAHREN ZUM BETRIEB EINES KRAFTFAHRZEUGS**
MOTOR VEHICLE AND METHOD FOR OPERATING A MOTOR VEHICLE
VÉHICULE AUTOMOBILE ET PROCÉDÉ POUR FAIRE FONCTIONNER UN VÉHICULE AUTOMOBILE

(30) Priorität: 03.05.2023 DE 102023111482
(43) Veröffentlichungstag der Anmeldung: 11.03.2026
(73) Patentinhaber: AUDI AG, 85057 Ingolstadt (DE)
(72) Erfinder: HAINZLMAIER, Andre, 85290 Geisenfeld (DE); RESCHKE, Johannes, 84084 Langquaid (DE)
(74) Vertreter: Lindner Blaumeier Patent- und Rechtsanwälte
(86) Internationale Anmeldenummer: PCT/EP2024/061142
(87) Internationale Veröffentlichungsnummer: WO 2024/227664

(56) Entgegenhaltungen:
- EP-B1- 0 911 216
- EP-B1- 1 950 089
- DE-A1- 10 103 702
- DE-A1- 10 242 864
- DE-A1- 102005 020 235
- DE-A1- 102008 044 176

## Beschreibung

Die Erfindung betrifft ein Kraftfahrzeug, aufweisend nach außen gerichtete Beleuchtungseinrichtungen, die wenigstens eine messende Beleuchtungseinrichtung umfassen, welche wenigstens eine Lichtquelle aufweist, wobei die Lichtquelle der messenden Beleuchtungseinrichtung zum Aussenden von Licht und zum Messen von einfallendem Licht betreibbar ist und das Kraftfahrzeug ferner eine Steuereinrichtung aufweist, die zur Auswertung von im Messbetrieb ermittelten Messdaten der Lichtquelle ausgebildet ist. Daneben betrifft die Erfindung ein Verfahren zum Betrieb eines solchen Kraftfahrzeugs.

Kraftfahrzeuge weisen üblicherweise eine Mehrzahl von nach außen wirksamen, mithin nach außen gerichteten, Beleuchtungseinrichtungen auf, die zum einen der Ausleuchtung der Umgebung dienen können, zum anderen zusätzlich oder alternativ auch zur besseren Erkennbarkeit des Kraftfahrzeugs beitragen können. Beispielsweise umfassen Kraftfahrzeuge üblicherweise Frontscheinwerfer zum Ausleuchten des Vorfelds des Kraftfahrzeugs und Heckleuchten, die wenigstens eine Rücklichtfunktion als Positionslicht bereitstellen. In derartige Heckleuchten können auch Bremslichter integriert sein. Ferner können Kraftfahrzeuge als Beleuchtungseinrichtungen beispielsweise Fahrtrichtungsanzeiger, Kennzeichenlicht und seitliche Positionslichter (Seitenleuchten) umfassen. Auch eine Vielzahl weiterer, funktioneller Beleuchtungseinrichtungen ist denkbar, beispielsweise zum Ausleuchten von Ein- und Ausstiegsbereichen.

Zumindest hinsichtlich der die Erkennbarkeit des Kraftfahrzeugs verbessernden Beleuchtungseinrichtungen sowie der das Umfeld des Kraftfahrzeugs für den Fahrer ausleuchtenden Beleuchtungseinrichtungen ist es bekannt, verschiedene Betriebsmodi vorzusehen, beispielsweise "Tagfahrlicht", "Abblendlicht", "Fernlicht" und dergleichen. Diese Betriebsmodi können in vielen Kraftfahrzeugen auch automatisiert schaltbar sein, beispielsweise aufgrund einer Information über die allgemeine Umgebungshelligkeit um das Kraftfahrzeug. Eine solche Umgebungshelligkeitsinformation kann beispielsweise durch einen Lichtsensor, beispielsweise einen sogenannten Regenlichtsensor, bereitgestellt werden.

Beleuchtungseinrichtungen moderner Kraftfahrzeuge sind häufig segmentiert, das bedeutet, weisen unabhängig ansteuerbare Lichtquellen und/oder unabhängig ausleuchtbare Segmente in ihrem Ausleuchtungsbereich auf. Für Frontscheinwerfer ist beispielsweise sogenanntes digitales Matrixlicht vorgeschlagen worden, zu dessen Realisierung ein Leuchtdioden-Array und/oder eine Mikrospiegel-Einrichtung vorgesehen sein können. Für Heckleuchten und sonstige Beleuchtungseinrichtungen können als Lichtquellen ebenso Leuchtdioden vorgesehen sein, beispielsweise auch organische Leuchtdioden (OLED).

Hinsichtlich Leuchtdioden als Lichtquellen wurde auch bereits vorgeschlagen, neben einem Leuchtbetrieb, in dem die jeweilige Leuchtdiode Licht aussendet, einen Messbetrieb vorzusehen, in dem die Leuchtdiode nach Art einer Photodiode einfallendes Licht misst, beispielsweise zur Detektion entgegenkommender Verkehrsteilnehmer anhand deren Scheinwerfern.

So offenbart beispielsweise DE 10 2008 032 345 A1 einen Scheinwerfer für Kraftfahrzeuge mit einer Lichtquelleneinrichtung zur Erzeugung einer vorgegebenen Lichtverteilung und einer Lichtsensoreinrichtung zur Erfassung der Helligkeit in einem Vorfeld des Kraftfahrzeugs. In einer Dunkelphase der dortigen Leuchtdioden kann einfallendes Licht eines Verkehrsobjektes erkannt werden und ein Fernlicht zum Ausblenden des Verkehrsobjektes angesteuert werden.

DE 10 2019 128 401 A1 betrifft ein Verfahren und eine Steuereinheit zum Betrieb einer Beleuchtungseinheit als Lichtsensor. Dabei wird vorgeschlagen, Leuchtdioden in einem ersten Zeitintervall als Lichtquelle zu betreiben und in einem zweiten Zeitintervall als Lichtsensor zu betreiben, um Messdaten in Bezug auf eine Beleuchtungssituation in einem Umfeld der Beleuchtungseinheit zu erfassen. Auf Basis der Messdaten wird bestimmt, ob sich ein Objekt in dem Umfeld der Beleuchtungseinheit befindet. Die Beleuchtungseinheit ist insbesondere einer Kamera zugeordnet, deren Erfassungsbereich sie ausleuchtet.

DE 101 03 702 A1 betrifft eine Elektronik zur dualen Ansteuerung und Auswertung von Lichtquellen, vorzugsweise Leuchtdioden. Dabei soll in ein- und demselben Leuchtmittel auf gleichem Signalweg sowohl Licht erzeugt als auch auf umgekehrtem Signalweg Helligkeit gemessen werden. Beispielsweise kann bei einer Bremsleuchte aus derselben Richtung, in der dieses Signallicht eines Fahrzeugs Licht abgibt, die Umgebungshelligkeit exakt der gleichen Richtung vermessen werden, um die Helligkeit anzupassen.

DE 10 2005 042 082 A1 betrifft eine Schaltungsanordnung mit Leuchtdiode und ein Verfahren zur Steuerung einer Leuchtdiode, wobei eine Messung der Umgebungshelligkeit mit der als Detektor arbeitenden Leuchtdiode erfolgen soll. Dabei wird der physikalische Effekt ausgenutzt, dass jede Leuchtdiode, wenn sie nicht aktiv angesteuert wird, als Fotodiode, demnach als lichtempfindliches Bauteil, arbeitet. So kann ein Maß für die Umgebungshelligkeit gewonnen werden, um die Helligkeit der Leuchtdiode zu steuern.

DE 10 2005 018 175 A1 betrifft ein LED-Modul und eine LED-Beleuchtungseinrichtung mit mehreren LED-Modulen, wobei eine Regelung des Betriebsstroms in Abhängigkeit von gespeicherten Betriebsdaten erfolgen soll, um eine hohe Lang-zeitstabilität der emittierten Lichtstärke und eine Vorkehrung bei Austausch zu erreichen. Ein zusätzlicher Lichtdetektor, beispielsweise eine Fotodiode, kann vorgesehen sein, um auch die Umgebungshelligkeit zu messen und den Betriebsstrom der LED-Chips an die Umgebungslichtverhältnisse anzupassen. Auch ein automatischer Ein- oder Ausschaltvorgang ist erwähnt.

EP 1 950 089 B1 betrifft eine Fahrzeugbeleuchtung bzw. ein Verfahren zu deren Steuerung bei ausgeschalteter Fahrzeugzündung, bei der das Risiko einer unbeabsichtigten Beschädigung eines abgestellten Fahrzeugs bei einer möglichst geringen Belastung der Fahrzeugbatterie vermindert wird. Hierzu wird vorgeschlagen, in der Fahrzeugfront und im Fahrzeugheck Helligkeitssensoren, die durch Leuchtdioden einer Frontbeleuchtungseinheit und/oder einer Heckbeleuchtungseinheit realisiert sein können, vorzusehen und Helligkeitswerte zu erfassen. Bei einer detektierten Lichtintensitäts-Differenz zwischen Fahrzeugfront und Fahrzeugheck bzw. zwischen gegenüberliegenden Fahrzeugseiten wird eine Parklichtfunktion selektiv eingeschaltet. Auf diese Weise kann eine Annäherung eines Fahrzeugs, dessen Frontscheinwerfer das abgestellte Fahrzeug erfassen, erfasst werden. Eine Umgebungshelligkeit entscheidet darüber, ob die Parklichtfunktion grundsätzlich aktiviert werden soll oder nicht.

EP 0 911 216 B1 offenbart eine automatische Steuerung des Einschaltens der Kfz-Leuchten, um Verzögerungen oder störendes Einschalten in der Dämmerung zu vermeiden. Zur Lösung des Problems wird vorgeschlagen, zwei Helligkeitssensoren für die Umgebungshelligkeit zu verwenden, die unter einem Winkel zueinander ausgerichtet sind. Ein erstes Analysemittel bestimmt den Anteil des natürlichen Lichts anhand des kontinuierlichen Signalanteils, ein zweites Analysemittel den Anteil des künstlichen Lichts anhand des periodischen Signalanteils und ein drittes Analysemittel vergleicht die Ausgänge der Helligkeitssensoren, um einen dunklen Himmel in der Umgebung zu detektieren, sodass eine Verzögerung des Einschaltens der Lichtquellen des Kraftfahrzeugs gegenüber dem Signal der ersten Analysemittel ermittelt werden kann. Hierbei sind die innerhalb des Kraftfahrzeugs vorgesehenen Helligkeitssensoren, insbesondere an einem Innen-Rückspiegel, vorzugsweise so angeordnet, dass einer durch die Windschutzscheibe auf den Himmel und ein zweiter durch die Rück- und Seitenscheiben in die Horizontale gerichtet ist.

DE 10 2005 020 235 A1 betrifft eine Kraftfahrzeuglichtanlage mit einer Frontlichteinheit und ein Verfahren zu deren automatischer Betätigung. In Situationen, in denen die Sonne rückwärtig auf ein Kraftfahrzeug scheint, kann der Gegenverkehr, welcher von der Sonne geblendet wird, das entgegenkommende Kraftfahrzeug nur schwer erkennen, weswegen vorgeschlagen wird, ein zweites Erfassungselement zur Erfassung eines rückwärtigen, flachen Sonnenlichteinfalls im Heckbereich des Kraftfahrzeugs anzuordnen. Durch diese sehr genaue und exakte Erfassung der Helligkeit eines rückwärtig einfallenden Sonnenlichts kann das Unfallrisiko in derartigen Situationen deutlich vermindert werden. Die detektierten Helligkeiten werden über einen Kommunikationsbus empfangen und verglichen.

DE 10 2008 044 176 A1 betrifft einen Helligkeitssensor, der einen Richtungssensor zum Erkennen einer ersten Beleuchtungsstärke in einem festgelegten ersten Raumwinkel und einen Globalsensor zum Erkennen einer zweiten Beleuchtungsstärke in einem festgelegten zweiten Raumwinkel aufweist. Auf diese Weise soll es ermöglicht werden, den Richtungssensor so einzustellen, dass Brücken, Tunnel und andere die Helligkeit beeinflussende Besonderheiten der Umgebung bei allen Lichtverhältnissen sicher erkannt werden. Hierzu wird konkret vorgeschlagen, dass ein Parameter zum Auswerten des Signals des Richtungssensors in Abhängigkeit des Signals des Globalsensors angepasst wird.

DE 102 42 864 A1 betrifft eine automatische Scheinwerfer-Regeleinrichtung für ein Kraftfahrzeug, wobei mindestens ein Scheinwerfer als Sensor eine Leuchtdiode zur Messung der Helligkeit einfallenden Lichts aufweist. So soll ein hohes Maß an Verkehrssicherheit bei einem relativ geringen baulichen Aufwand gewährleistet werden. In Abhängigkeit von dem Einfallwinkel und der Beleuchtungsstärke des einfallenden Lichts wird eine Lichtverteilung eingestellt, wobei insbesondere Straßenarten detektiert werden.

Der Erfindung liegt daher die Aufgabe zugrunde, ein hinsichtlich der Erkennung globaler Ausleuchtungsumstände der Umgebung des Kraftfahrzeugs und deren Änderung verbessertes Kraftfahrzeug anzugeben.

Diese Aufgabe wird erfindungsgemäß gelöst durch ein Kraftfahrzeug mit den Merkmalen des Anspruchs 1 und ein Verfahren mit den Merkmalen des Anspruchs 8.

Bei einem Kraftfahrzeug der eingangs genannten Art ist erfindungsgemäß vorgesehen, dass die Steuereinrichtung zur Ermittlung einer eine Umgebungshelligkeit um das Kraftfahrzeug beschreibenden Umgebungshelligkeitsinformation aus den Messdaten und zur Ansteuerung wenigstens eines Fahrzeugsystems unter Verwendung der Umgebungshelligkeitsinformation ausgebildet ist, wobei das Kraftfahrzeug wenigstens zwei an unterschiedlichen Positionen am Kraftfahrzeug angeordnete und/oder in unterschiedliche Richtungen ausgerichtete messende Beleuchtungseinrichtungen aufweist, wobei die Steuereinrichtung zur Zusammenschau der Messdaten der messenden Beleuchtungseinrichtungen bei der Ermittlung der Umgebungshelligkeitsinformation ausgebildet ist.

Die Umgebungshelligkeitsinformation betrifft globale Ausleuchtungsumstände, also die allgemeinen Lichtverhältnisse, in der Umgebung, in der sich das Kraftfahrzeug befindet, insbesondere gerade betrieben wird bzw. fährt. Anders gesagt beschreibt die Umgebungshelligkeitsinformation nicht lokale Lichtschwankungen oder Lichteffekte, beispielsweise einzelner Leuchtmittel, sondern die diffuse Beleuchtungssituation außerhalb des Kraftfahrzeugs, wie sie beispielsweise durch Sonnenstand und Bewölkungssituation, gegebenenfalls auch größere Abschaltungen, bzw. durch verteilte Leuchtmittel zur Herstellung einer Gesamtausleuchtung in geschlossenen Räumen, beispielsweise Parkhäusern oder Tunneln, gegeben ist. Anders ausgedrückt betrifft die Umgebungshelligkeitsinformation jene Information über die allgemeine Umgebungshelligkeit, die bislang von Lichtsensoren bereitgestellt wurde. Durch die Nutzung von Beleuchtungseinrichtungen des Kraftfahrzeugs zum Vermessen der allgemeinen Umgebungshelligkeit kann ein solcher dedizierter Lichtsensor entfallen. Entsprechende Kosten und entsprechender Aufwand können eingespart werden.

Bei der wenigstens einen Lichtquelle des messenden Beleuchtungseinrichtung kann es sich insbesondere um eine Leuchtdiode handeln. Die Erfindung nutzt mithin aus, dass Leuchtdioden (LEDs) auch "umgekehrt", mithin als eine Art Photodiode, verwendet werden können, um damit Helligkeit zu messen. Zweckmäßigerweise umfasst die messende Beleuchtungseinrichtung dabei mehrere Lichtquellen, insbesondere Leuchtdioden, deren Messdaten statistisch zur Verbesserung der Messgenauigkeit verarbeitet werden können. Beispielsweise kann die messende Beleuchtungseinrichtung eine Leuchtdiodenanordnung, insbesondere eine Leuchtdioden-Matrix oder ein Leuchtdioden-Array, umfassen. Die Steuereinrichtung kann ausgebildet sein, bei der statistischen Auswertung der Messdaten mehrerer Lichtquellen einer messenden Beleuchtungseinrichtung lokale Effekte, beispielsweise ein lokales Anleuchten durch ein kraftfahrzeugexternes Leuchtmittel oder eine lokale Abschaltung, zu detektieren und betroffene Messdaten der Auswertung zu entziehen. Auf diese Weise, insbesondere bei Verwendung vieler Lichtquellen, kann auch bereits mittels einer einzigen messenden Beleuchtungseinrichtung ein verlässlicher Wert für die Umgebungshelligkeitsinformation ermittelt werden. In den in den Ansprüchen definierten Ausführungsformen werden hierzu mehrere messende Beleuchtungseinrichtungen eingesetzt. Erfindungsgemäß ist die Steuereinrichtung zur Berücksichtigung eines zeitlichen Verlaufs der Messdaten der Lichtquelle der messenden Beleuchtungseinrichtung bei der Ermittlung der Umgebungshelligkeitsinformation ausgebildet. In diesem Zusammenhang kann ferner vorteilhaft vorgesehen sein, wenn die Steuereinrichtung zur Berücksichtigung einer Ausrichtung der Lichtquelle der messenden Beleuchtungseinrichtung und/oder von von der oder einer weiteren Lichtquelle der messenden Beleuchtungseinrichtung ausgesandtem Licht bei der Ermittlung der Umgebungshelligkeitsinformation ausgebildet ist. In Bezug auf eine messende Beleuchtungseinrichtung können mithin Begleitumstände der Messung möglichst weitgehend berücksichtigt werden, um die Qualität der Umgebungshelligkeitsinformation zu erhöhen. Beispielsweise kann anhand einer Ausrichtung der Lichtquelle gefolgert werden, ob die Lichtquelle von lokalem Lichteinfall betroffen ist, beispielsweise von Scheinwerfern anderer Verkehrsteilnehmer angeleuchtet wird. In diesem Zusammenhang ist auch die Berücksichtigung des zeitlichen Verlaufs der Messdaten äußerst vorteilhaft, da beispielsweise temporäre lokale Lichteffekte, wie das Anstrahlen durch Scheinwerfer anderer Verkehrsteilnehmer, erkannt und berücksichtigt werden können, beispielsweise durch einen Ausschluss bei der Ermittlung der sich zeitlich üblicherweise eher langsam ändernden allgemeinen Umgebungshelligkeit. Allgemeiner gesagt kann vorgesehen sein, dass die Steuereinrichtung zur statistischen Auswertung der Messdaten in einem mehrere Messzeitpunkte umfassenden Zeitfenster ausgebildet ist. Auf diese Weise kann eine weitere Qualitätserhöhung und Verlässlichkeit der Umgebungshelligkeitsinformation erreicht werden, insbesondere gemeinsam mit einer räumlichem statistischen Zusammenschau bei mehreren Lichtquellen einer messenden Beleuchtungseinrichtung.

Andererseits kann eine Betrachtung des zeitlichen Verlaufs jedoch auch Hinweise auf Ereignisse geben, die mit einer schnelleren Änderung der allgemeinen Umgebungshelligkeit einhergehen. Beispielsweise kann die Steuereinrichtung zur Auswertung des zeitlichen Verlaufs der Messdaten zur Detektion von Tunneleinfahrten und/oder Tunnelausfahrten ausgebildet sein. Ändert sich beispielsweise die gemessene Helligkeit von im Schnitt andauernd hell zu im Schnitt andauernd dunkel, deutet dies auf eine Einfahrt in einen Tunnel oder ein sonstiges Bauwerk hin. Entsprechende Beurteilungskriterien können formuliert werden. Eine besonders schnelle und verlässliche Detektion von Tunnelein- und ausfahrten ergibt sich bei entlang der Längsachse des Kraftfahrzeugs beabstandeten messenden Beleuchtungseinrichtungen und der Beurteilung der jeweiligen zeitlichen Verläufe, worauf im Folgenden noch genauer eingegangen werden wird.

Berücksichtigt werden durch die Steuereinrichtung kann ferner auch durch die messende Beleuchtungseinrichtung oder auch eine benachbarte Beleuchtungseinrichtung entstehendes, eigenes Streulicht, mithin von der oder einer weiteren Lichtquelle der messenden Beleuchtungseinrichtung ausgesandtes Licht. Denkbar ist jedoch auch ein insgesamt gepulster Betrieb der Lichtquellen der messenden Beleuchtungseinrichtung, wie dies aus dem Stand der Technik bereits vorgeschlagen wurde. Dann kann die Messung idealerweise zu einem Zeitpunkt erfolgen, zu dem keinerlei Lichtaussendung in der messenden Beleuchtungseinrichtung selbst erfolgt.

Die Erfindung sieht vor, dass das Kraftfahrzeug wenigstens zwei an unterschiedlichen Positionen am Kraftfahrzeug angeordnete und/oder in unterschiedliche Richtungen ausgerichtete messende Beleuchtungseinrichtungen aufweist, wobei die Steuereinrichtung zur Zusammenschau der Messdaten der messenden Beleuchtungseinrichtungen bei der Ermittlung der Umgebungshelligkeitsinformation ausgebildet ist. Es wurde erkannt, dass letztlich jede Leuchtdiode im Kraftfahrzeug grundsätzlich auch zur Messung herangezogen werden kann, sodass verschieden positionierte und/oder verschieden ausgerichtete Lichtquellen geschickt verteilt gewählt werden können, um beispielsweise durch gegenseitige Plausibilisierung auf noch robustere Art und Weise die Umgebungshelligkeitsinformation bestimmen zu können. Insbesondere kann dabei vorgesehen sein, dass die wenigstens drei messenden Beleuchtungseinrichtungen wenigstens eine messende Beleuchtungseinrichtung mit einer seitlichen Ausrichtung aufweisen. Insbesondere können auch alle vier denkbaren Ausrichtungen vorgesehen werden. Beispielsweise können die messenden Beleuchtungseinrichtungen dann wenigstens einen Frontscheinwerfer, wenigstens eine Heckleuchte und wenigstens zwei sich gegenüberliegende Seitenleuchten umfassen. Zusätzlich oder alternativ kann auch vorgesehen sein, dass wenigstens zwei der mehreren messenden Beleuchtungseinrichtungen in Kraftfahrzeuglängsrichtung beabstandete Positionen aufweisen. Dies ist, wie noch genauer dargelegt werden wird, besonders zweckmäßig, wenn während der Fortbewegung des Kraftfahrzeugs in dessen Längsrichtung auftretende Helligkeitswechsel als Teil der Umgebungshelligkeitsinformation detektiert werden sollen, insbesondere Tunneleinfahrten und Tunnelausfahrten.

Wie bereits erwähnt, kann die Steuereinrichtung bei der Zusammenschau zur gegenseitigen Plausibilisierung der Messdaten hinsichtlich der Umgebungshelligkeit ausgebildet sein. Trifft beispielsweise auf eine vordere oder hintere messende Beleuchtungseinrichtung Licht eines anderen Verkehrsteilnehmers auf, ist es unwahrscheinlich, dass auch die anderen messenden Beleuchtungseinrichtungen betroffen sind, sodass eine Plausibilisierung möglich und zweckmäßig ist. Werden beispielsweise messende Beleuchtungseinrichtungen an Front und Heck verwendet, und misst die wenigstens eine Lichtquelle einer vorderen messenden Beleuchtungseinrichtung eine hohe Umgebungshelligkeit, kann diese Fehlmessung über eine zusätzliche Messung am Heck plausibilisiert und erkannt werden.

Besonders vorteilhaft ist es, wenn die Steuereinrichtung bei der Detektion von Tunneleinfahrten und Tunnelausfahrten zur Verwendung einer Korrelation der zeitlichen Verläufe für verschiedene messende Beleuchtungseinrichtungen ausgebildet ist. Treten beispielsweise nacheinander Wechsel von hell nach dunkel an der Fahrzeugfront und am Fahrzeugheck oder bei anderweitig in Kraftfahrzeuglängsrichtung beanstandeten messenden Beleuchtungseinrichtungen auf, kann davon ausgegangen werden, dass gerade eine Tunneleinfahrt passiert wird. Dabei kann bei der Beurteilung der Korrelation auch eine aktuelle Geschwindigkeit des Kraftfahrzeugs, die der Steuereinrichtung bereitgestellt wird, berücksichtigt werden. Auf diese Weise wird bekannt, wie weit die Helligkeitswechsel in den zeitlichen Verläufen auseinanderliegen sollten, um auf dieselbe Ursache, nämlich das Passieren der Tunneleinfahrt oder der Tunnelausfahrt, zurückgeführt werden zu können. Auf diese Weise können Tunneleinfahrten und Tunnelausfahrten deutlich schneller robust und verlässlich erkannt werden. Zeitverzögerungen, wie sie bei herkömmlichen Lichtsensoren oft auftraten, können vermieden oder zumindest reduziert werden. In diesem Zusammenhang kann die Steuereinrichtung auch ausgebildet sein, die Position und/oder die Ausrichtung der messenden Beleuchtungseinrichtung zu berücksichtigen. Dies kann auch bei Korrelationen, die sich auf die gleiche Position in Kraftfahrzeuglängsrichtung, aber unterschiedliche Ausrichtungen beziehen, zweckmäßig sein, denn erkennen zwei unterschiedlich ausgerichtete messende Beleuchtungseinrichtungen im Wesentlichen gleichzeitig einen Helligkeitswechsel, kann dies ebenso für eine Tunneleinfahrt oder Tunnelausfahrt sprechen.

In einer konkreten, bevorzugten Ausgestaltung kann das Fahrzeugsystem, das in Abhängigkeit der Umgebungshelligkeitsinformation angesteuert wird, ein wenigstens einen Teil der Beleuchtungseinrichtungen des Kraftfahrzeugs umfassendes Beleuchtungssystem umfassend Frontscheinwerfer des Kraftfahrzeugs sein, für das die Steuereinrichtung unter Verwendung der Umgebungshelligkeitsinformation eine Fahrlichtschaltung realisiert. Eine Fahrlichtschaltung bezeichnet hierbei die Umschaltung zwischen verschiedenen Betriebsmodi aufgrund geänderter allgemeiner Umgebungslichtverhältnisse. Ist beispielsweise aufgrund der Umgebungshelligkeitsinformation erkennbar, dass die Nacht hereinbricht, kann statt eines Tagfahrlichts oder ausgeschalteter Frontscheinwerfer ein Abblendlicht aktiviert werden. Dies gilt auch, wenn anhand der Umgebungshelligkeitsinformation erkannt wird, dass eine Tunneleinfahrt passiert wird. An der Tunnelausfahrt bzw. bei Rückkehr des Tageslichts kann umgekehrt von einem aktuellen, auf Dunkelheit abgestimmten Betriebsmodus wieder zu Tagfahrlicht gewechselt werden bzw. das Licht abgeschaltet werden oder dergleichen. Anders gesagt erlaubt es die vorliegende Erfindung, die bislang über einen dedizierten Lichtsensor umgesetzte Fahrlichtschaltung zwischen unterschiedlichen Betriebsmodi des Beleuchtungssystems in Abhängigkeit der Umgebungshelligkeitsinformation nun auch aufgrund von Messdaten messender Beleuchtungseinrichtungen umzusetzen.

Auch andere Fahrzeugsysteme können in Abhängigkeit der Umgebungshelligkeitsinformation angesteuert werden. Liegt beispielsweise eine Information vor, dass bei wenigstens teilweise automatischer Führung des Kraftfahrzeugs der Fahrer diese innerhalb von Tunneln und/oder bei bestimmten Lichtverhältnissen nicht nutzen möchte, kann eine entsprechende Deaktivierung (nach Fahrübernahmeaufforderung oder sonstiger Information des Fahrers) ausgelöst werden und dergleichen.

Nachdem für Frontscheinwerfer und/oder Heckleuchten in Kraftfahrzeugen immer häufiger Leuchtdioden als Lichtquellen eingesetzt werden, die auch in der Art einer Photodiode genutzt werden können, ist erfindungsgemäß vorgesehen, dass die wenigstens eine messende Beleuchtungseinrichtung einen Frontscheinwerfer und eine Heckleuchte des Kraftfahrzeugs umfasst.

Neben dem Kraftfahrzeug betrifft die vorliegende Erfindung auch ein Verfahren zum Betrieb eines erfindungsgemäßen Kraftfahrzeugs, wobei mit der Lichtquelle der messenden Beleuchtungseinrichtung in einem Messbetrieb das einfallende Licht beschreibende Messdaten erfasst werden und die Steuereinrichtung eine eine Umgebungshelligkeit um das Kraftfahrzeug beschreibende Umgebungshelligkeitsinformation aus den Messdaten ermittelt und wenigstens ein Fahrzeugsystem unter Verwendung der Umgebungshelligkeitsinformation ansteuert, wobei die Steuereinrichtung die Messdaten der messenden Beleuchtungseinrichtungen bei der Ermittlung der Umgebungshelligkeitsinformation in Zusammenschau betrachtet und einen zeitlichen Verlauf der Messdaten der Lichtquelle der messenden Beleuchtungseinrichtung bei der Ermittlung der Umgebungshelligkeitsinformation berücksichtigt. Sämtliche Ausführungen bezüglich des erfindungsgemäßen Kraftfahrzeugs lassen sich analog auf das erfindungsgemäße Verfahren übertragen, sodass auch mit diesem die bereits genannten Vorteile erhalten werden können.

Weitere Vorteile und Einzelheiten der vorliegenden Erfindung ergeben sich aus dem im Folgenden beschriebenen Ausführungsbeispielen sowie anhand der Zeichnungen. Dabei zeigen:
- Fig. 1: eine Prinzipskizze eines erfindungsgemäßen Kraftfahrzeugs,
- Fig. 2: eine Prinzipskizze einer messenden Beleuchtungseinrichtung,
- Fig. 3: ein erstes Beispiel für zeitliche Verläufe von gemessenen Helligkeiten unterschiedlicher messender Beleuchtungseinrichtungen,
- Fig. 4: ein zweites Beispiel für zeitliche Verläufe von gemessenen Helligkeiten unterschiedlicher messender Beleuchtungseinrichtungen, und
- Fig. 5: einen Ablaufplan eines Ausführungsbeispiels des erfindungsgemäßen Verfahrens.

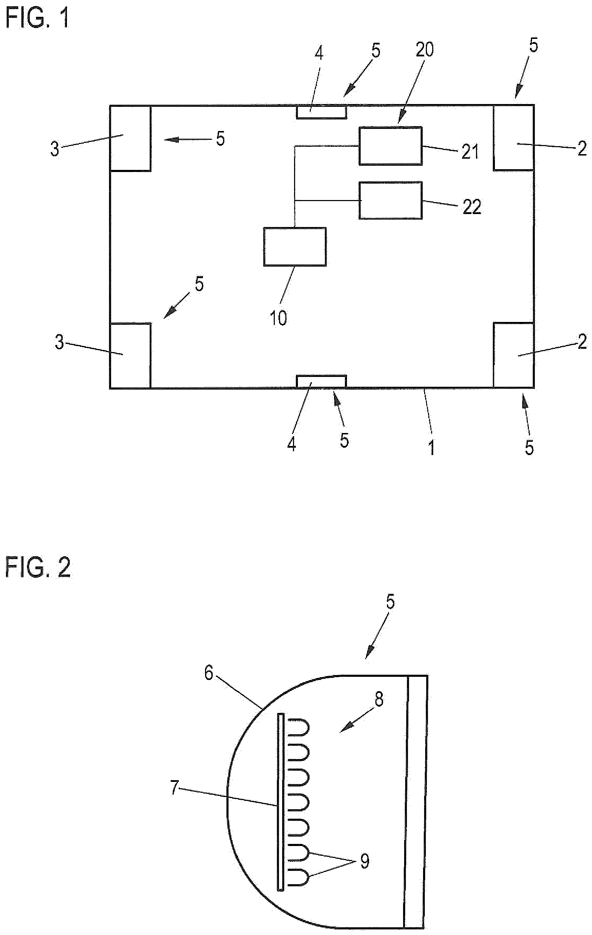

Fig. 1 zeigt eine Prinzipskizze eines erfindungsgemäßen Kraftfahrzeugs 1. Das Kraftfahrzeug 1 weist eine Vielzahl von Beleuchtungseinrichtungen auf, unter anderem Frontscheinwerfer 2, Heckleuchten 3 und Seitenleuchten 4. Die hier gezeigten Beleuchtungseinrichtungen sind allesamt messende Beleuchtungseinrichtungen 5, die als Lichtquellen mehrere Leuchtdioden aufweisen.

Beispielhaft zeigt Fig. 2 eine Prinzipskizze einer solchen messenden Beleuchtungseinrichtung 5, die in einem Gehäuse 6, von einer Leiterplatte 7 getragen, eine als Leuchtdioden-Matrix oder Leuchtdioden-Array ausgebildete Leuchtdiodenanordnung 8 mit Leuchtdioden 9 aufweist. Jede der Leuchtdioden 9 kann in einem Leuchtbetrieb, in dem sie Licht aussendet, und in einem Messbetrieb, in dem sie einfallendes Licht als Helligkeit misst, betrieben werden. Beispielsweise können die Leuchtdioden 9 gepulst betrieben werden, wobei sich der Leuchtbetrieb und der Messbetrieb beispielsweise abwechseln können. Dann werden die Helligkeit einfallenden Lichts beschreibende Messdaten aufgenommen, wenn die messende Beleuchtungseinrichtung 5 selbst gerade kein störendes Licht ausstrahlt. Alternativ ist es jedoch auch denkbar, dieses selbst ausgestrahlte Licht, insbesondere im Rahmen einer Korrektur, zu berücksichtigen.

Zurückkehrend zu Fig. 1 weist das Kraftfahrzeug 1 eine Steuereinrichtung 10, beispielsweise ein Steuergerät, auf, in dem die Messdaten der messenden Beleuchtungseinrichtungen 5 ausgewertet werden. Konkret ermittelt die Steuereinrichtung 10 eine Umgebungshelligkeitsinformation, die die allgemeine Umgebungshelligkeit im Umfeld des Kraftfahrzeugs beschreibt, mithin die globalen Umgebungslichtverhältnisse ohne Berücksichtigung lokaler bzw. temporärer Lichteffekte. Um dies zu erreichen, insbesondere lokale und/oder temporäre Lichteffekte auszuschließen, nutzt die Steuereinrichtung 10 zum einen aus, dass jede messende Beleuchtungseinrichtung 5 mehrere Leuchtdioden 9 aufweist, deren Messdaten statistisch zur qualitativen Verbesserung und Erhöhung der Verlässlichkeit des Messergebnisses ausgewertet werden können. Weitere Verbesserungen können durch zeitliche statistische Auswertung über ein Zeitfenster erfolgen.

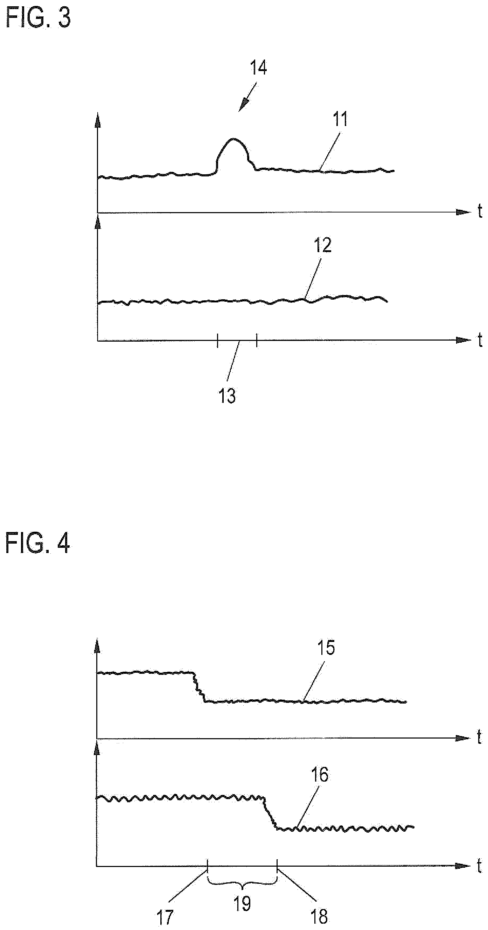

Insbesondere aber wird ausgenutzt, dass mehrere über das Kraftfahrzeug 1 verteilte, also an unterschiedlichen Positionen vorgesehene und/oder unterschiedlich ausgerichtete messende Beleuchtungseinrichtungen 5 verwendet werden, was in der Steuereinrichtung 10 eine gegenseitige Plausibilisierung, insbesondere zur Entfernung temporärer und/oder lokaler Lichteffekte aus der Betrachtung, erlaubt, die diese durchführt. Beispielsweise zeigt Fig. 3 ein erstes Beispiel von zeitlichen Verläufen 11, 12 der Messdaten unterschiedlicher messender Beleuchtungseinrichtungen 5. Beispielsweise kann der zeitliche Verlauf 11 mit einem der Frontscheinwerfer 2, die nach vorne ausgerichtet sind, gemessen worden sein, der zeitliche Verlauf 12 mit einer der Heckleuchten 3, die nach hinten ausgerichtet sind. In einem Zeitraum 13 streift nun der Lichtkegel eines entgegenkommenden Verkehrsteilnehmers den Frontscheinwerfer 2, was sich in einem Peak 14 äußert, der allerdings nur für den bzw. die Frontscheinwerfer 2 festgestellt wird. Mithin kann über andere zeitliche Verläufe 12 festgestellt werden, dass es sich bei dem Peak 14 um einen temporären, lokalen, nicht zu beachtenden Lichteffekt handelt.

Die Umgebungshelligkeitsinformation kann auch beschreiben, dass in einen Tunnel (oder ein sonstiges geschlossenes Bauwerk) eingefahren bzw. aus diesem wieder ausgefahren wird. Dabei ist eine äußerst schnelle, verlässliche Feststellung von Tunneleinfahrten und Tunnelausfahrten möglich, die anhand des zweiten Beispiels von zeitlichen Verläufen 15, 16 von Messdaten in Fig. 4 erläutert werden soll. Dabei wird wiederum der zeitliche Verlauf 15 mit einem Frontscheinwerfer 2 aufgenommen, der zeitliche Verlauf 16 mit einer Heckleuchte 3. Ersichtlich sinkt zu einem Zeitpunkt 17 gemäß dem Verlauf 15 die gemessene Helligkeit auf einen neuen, dauerhaft niedrigeren Wert ab. Das Kraftfahrzeug 1 ist in einen Tunnel eingefahren, was zunächst mit der Front geschieht, dann mit dem Heck, sodass zu einem späteren Zeitpunkt 18 ein entsprechender Helligkeitsabfall auch im Verlauf 16 festzustellen ist. Es liegen mithin korrelierte Helligkeitsänderungen vor, die zeitlich um einen Zeitwert 19 beanstandet sind. Liegt in der Steuereinrichtung 10 auch ein Wert für die aktuelle Geschwindigkeit des Kraftfahrzeugs 1 vor, kann zusätzlich zu der zeitlichen Abfolge, die für eine tatsächliche Tunneleinfahrt spricht, auch überprüft werden, ob der Zeitwert 19 einem aufgrund der aktuellen Geschwindigkeit erwarteten Erwartungswert entspricht. Aufgrund dieser Korrelationen können Tunneleinfahrten und Tunnelausfahrten schneller und robuster festgestellt werden.

Die Steuereinrichtung 10 nutzt die ermittelte Umgebungshelligkeitsinformation zur Ansteuerung von Fahrzeugsystemen 20, wobei vorliegend beispielhaft ein Beleuchtungssystem 21 und ein Fahrzeugsystem 22 zur wenigstens teilweise automatischen Führung des Kraftfahrzeugs 1 gezeigt sind. Für das Beleuchtungssystem 21 wird eine Fahrlichtschaltung umgesetzt, sodass beispielsweise bei Einfahrt in einen Tunnel das Abblendlicht als Betriebsmodus aktiviert werden kann oder bei Erreichen einer ausreichenden allgemeinen Umgebungshelligkeit am Morgen auf Tagfahrlicht gewechselt werden kann. Mit anderen Worten wird ein Betriebsmodus des Beleuchtungssystems 21 in Abhängigkeit der Umgebungshelligkeitsinformation gewählt. Für das Fahrzeugsystem 22 kann dieses beispielsweise bestimmte Umgebungshelligkeitssituationen als vom Fahrer unbeliebt oder beliebt für die wenigstens teilweise automatischen Führung erkennen und entsprechende Maßnahmen ergreifen.

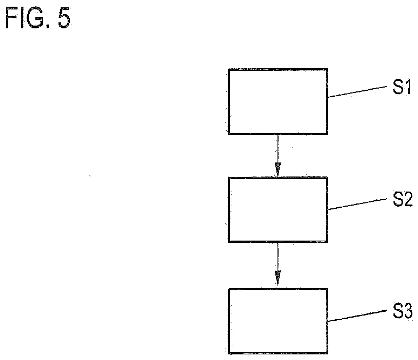

Fig. 5 zeigt schließlich einen Ablaufplan eines Ausführungsbeispiels des erfindungsgemäßen Verfahrens. In einem Schritt S1 werden dabei Messdaten mit dem messenden Beleuchtungseinrichtungen 5 aufgenommen. Diese Messdaten werden im Schritt S2 von der Steuereinrichtung 10 zur Ermittlung der Umgebungshelligkeitsinformation ausgewertet. Hierzu kann die Steuereinrichtung 10 beispielsweise eine Auswerteeinheit umfassen. Im Schritt S3 wird die Umgebungshelligkeitsinformation dann genutzt, um wenigstens eines der Fahrzeugsysteme 20 anzusteuern. Dies kann über eine entsprechende Steuereinheit geschehen.

## Patentansprüche

1. Kraftfahrzeug (1), aufweisend nach außen gerichtete Beleuchtungseinrichtungen (5), die wenigstens eine messende Beleuchtungseinrichtung (5) umfassen, welche wenigstens eine Lichtquelle aufweist, wobei die Lichtquelle der messenden Beleuchtungseinrichtung (5) zum Aussenden von Licht und zum Messen von einfallendem Licht betreibbar ist und das Kraftfahrzeug (1) ferner eine Steuereinrichtung (10) aufweist, die zur Auswertung von im Messbetrieb ermittelten Messdaten der Lichtquelle ausgebildet ist, wobei die Steuereinrichtung (10) zur Ermittlung einer eine Umgebungshelligkeit um das Kraftfahrzeug (1) beschreibenden Umgebungshelligkeitsinformation aus den Messdaten und zur Ansteuerung wenigstens eines Fahrzeugsystems (20) unter Verwendung der Umgebungshelligkeitsinformation ausgebildet ist, wobei das Kraftfahrzeug (1) wenigstens zwei an unterschiedlichen Positionen am Kraftfahrzeug (1) angeordnete und/oder in unterschiedliche Richtungen ausgerichtete messende Beleuchtungseinrichtungen (5) aufweist, wobei die messenden Beleuchtungseinrichtungen (5) einen Frontscheinwerfer (2) und eine Heckleuchte (3) des Kraftfahrzeugs (1) umfassen,
**dadurch gekennzeichnet,**
**dass** die Steuereinrichtung (10) zur Zusammenschau der Messdaten der messenden Beleuchtungseinrichtungen (5) bei der Ermittlung der Umgebungshelligkeitsinformation ausgebildet ist, wobei die Steuereinrichtung (10) zur Berücksichtigung eines zeitlichen Verlaufs (11, 12, 15, 16) der Messdaten der Lichtquelle der messenden Beleuchtungseinrichtung (5) bei der Ermittlung der Umgebungshelligkeitsinformation ausgebildet ist.

2. Kraftfahrzeug nach Anspruch 1,
**dadurch gekennzeichnet,**
**dass** die Lichtquelle eine Leuchtdiode (9) ist.

3. Kraftfahrzeug nach Anspruch 1 oder 2,
**dadurch gekennzeichnet,**
**dass** die Steuereinrichtung (10) ferner zur Berücksichtigung einer Ausrichtung der Lichtquelle der messenden Beleuchtungseinrichtung (5) und/oder von von der oder einer weiteren Lichtquelle der messenden Beleuchtungseinrichtung (5) ausgesandtem Licht bei der Ermittlung der Umgebungshelligkeitsinformation ausgebildet ist.

4. Kraftfahrzeug nach einem der vorangehenden Ansprüche,
**dadurch gekennzeichnet,**
**dass** die Steuereinrichtung (10) zur Auswertung des zeitlichen Verlaufs (11, 12, 15, 16) der Messdaten zur Detektion von Tunneleinfahrten und/oder Tunnelausfahrten und/oder zur statistischen Auswertung der Messdaten in einem mehrere Messzeitpunkte umfassenden Zeitfenster ausgebildet ist.

5. Kraftfahrzeug nach einem der vorangehenden Ansprüche,
**dadurch gekennzeichnet,**
**dass** die wenigstens zwei imessenden Beleuchtungseinrichtungen (5 zusätzlich wenigstens eine messende Beleuchtungseinrichtung mit einer seitlichen Ausrichtung aufweisen und/oder, dass wenigstens zwei der mehreren messenden Beleuchtungseinrichtungen (5) in Kraftfahrzeuglängsrichtung beabstandete Positionen aufweisen und/oder, dass die Steuereinrichtung (10) bei der Zusammenschau zur gegenseitigen Plausibilisierung der Messdaten unterschiedlicher messender Beleuchtungseinrichtungen (5) hinsichtlich der Umgebungshelligkeit ausgebildet ist.

6. Kraftfahrzeug nach einem der vorangehenden Ansprüche,
**dadurch gekennzeichnet,**
**dass** die Steuereinrichtung (10) bei der Detektion von Tunneleinfahrten und Tunnelausfahrten zur Verwendung einer Korrelation der zeitlichen Verläufe (11, 12, 15, 16) für verschiedene messende Beleuchtungseinrichtungen (5) und/oder zur Berücksichtigung der Position und/oder Ausrichtung der messenden Beleuchtungseinrichtung (5) ausgebildet ist.

7. Kraftfahrzeug nach einem der vorangehenden Ansprüche,
**dadurch gekennzeichnet,**
**dass** das Fahrzeugsystem (20), das in Abhängigkeit der Umgebungshelligkeitsinformation angesteuert wird, ein wenigstens einen Teil der Beleuchtungseinrichtungen (5) des Kraftfahrzeugs (1) umfassendes Beleuchtungssystem (21) umfassend Frontscheinwerfer (2) des Kraftfahrzeugs (1) ist, für das die Steuereinrichtung (10) unter Verwendung der Umgebungshelligkeitsinformation eine Fahrlichtschaltung realisiert.

8. Verfahren zum Betrieb eines Kraftfahrzeugs (1) nach einem der vorangehenden Ansprüche, wobei mit der Lichtquelle mindestens einer der messenden Beleuchtungseinrichtungen (5) in einem Messbetrieb das einfallende Licht beschreibende Messdaten erfasst werden und die Steuereinrichtung (10) eine eine Umgebungshelligkeit um das Kraftfahrzeug (1) beschreibende Umgebungshelligkeitsinformation aus den Messdaten ermittelt und wenigstens ein Fahrzeugsystem (20) unter Verwendung der Umgebungshelligkeitsinformation ansteuert, wobei die Steuereinrichtung (10) die Messdaten der messenden Beleuchtungseinrichtungen (5) bei der Ermittlung der Umgebungshelligkeitsinformation in Zusammenschau betrachtet und einen zeitlichen Verlauf (11, 12, 15, 16) der Messdaten der Lichtquellen der messenden Beleuchtungseinrichtungen (5) bei der Ermittlung der Umgebungshelligkeitsinformation berücksichtigt.

## Claims

1. Motor vehicle (1) having outwardly directed illumination devices (5) which comprise at least one measuring illumination device (5) having at least one light source, wherein the light source of the measuring illumination device (5) is operable for emitting light and for measuring incident light, and the motor vehicle (1) furthermore has a control device (10) designed to evaluate measurement data of the light source ascertained during measurement operation, wherein the control device (10) is designed to ascertain ambient brightness information describing an ambient brightness around the motor vehicle (1) from the measurement data and to control at least one vehicle system (20) using the ambient brightness information, wherein the motor vehicle (1) has at least two measuring illumination devices (5) arranged at different positions on the motor vehicle (1) and/or oriented in different directions, wherein the measuring illumination devices (5) comprise a front headlight (2) and a rear light (3) of the motor vehicle (1),
**characterized**
**in that** the control device (10) is designed to jointly consider the measurement data of the measuring illumination devices (5) when ascertaining the ambient brightness information, wherein the control device (10) is designed to take account of a temporal profile (11, 12, 15, 16) of the measurement data of the light source of the measuring illumination device (5) when ascertaining the ambient brightness information.

2. Motor vehicle according to Claim 1,
**characterized**
**in that** the light source is a light-emitting diode (9).

3. Motor vehicle according to Claim 1 or 2,
**characterized**
**in that** the control device (10) is furthermore designed to take account of an orientation of the light source of the measuring illumination device (5) and/or of light emitted by the or a further light source of the measuring illumination device (5) when ascertaining the ambient brightness information.

4. Motor vehicle according to any of the preceding claims,
**characterized**
**in that** the control device (10) is designed for evaluation of the temporal profile (11, 12, 15, 16) of the measurement data for detection of tunnel entrances and/or tunnel exits and/or for statistical evaluation of the measurement data in a time window comprising a plurality of measurement times.

5. Motor vehicle according to any of the preceding claims,
**characterized**
**in that** the at least two measuring illumination devices (5) additionally have at least one measuring illumination device with a lateral orientation and/or in that at least two of the plurality of measuring illumination devices (5) have positions spaced apart in the motor vehicle longitudinal direction and/or in that the control device (10), in the course of the joint consideration, is designed for mutual plausibility checking pertaining to the measurement data of different measuring illumination devices (5) with regard to the ambient brightness.

6. Motor vehicle according to any of the preceding claims,
**characterized**
**in that** the control device (10), when detecting tunnel entrances and tunnel exits, is designed to use a correlation of the temporal profiles (11, 12, 15, 16) for different measuring illumination devices (5) and/or to take account of the position and/or orientation of the measuring illumination device (5).

7. Motor vehicle according to any of the preceding claims,
**characterized**
**in that** the vehicle system (20) controlled depending on the ambient brightness information is an illumination system (21) comprising at least some of the illumination devices (5) of the motor vehicle (1) and comprising front headlights (2) of the motor vehicle (1), for which the control device (10) implements driving light switching using the ambient brightness information.

8. Method for operating a motor vehicle (1) according to any of the preceding claims, wherein measurement data describing the incident light, during measurement operation, are captured by the light source of at least one of the measuring illumination devices (5) and the control device (10) ascertains ambient brightness information describing an ambient brightness around the motor vehicle (1) from the measurement data and controls at least one vehicle system (20) using the ambient brightness information, wherein the control device (10) examines the measurement data of the measuring illumination devices (5) in a joint consideration when ascertaining the ambient brightness information and takes account of a temporal profile (11, 12, 15, 16) of the measurement data of the light sources of the measuring illumination devices (5) when ascertaining the ambient brightness information.

## Revendications

1. Véhicule automobile (1), possédant des dispositifs d'éclairage (5) orientés vers l'extérieur, lesquels comportent au moins un dispositif d'éclairage (5) mesurant, lequel possède au moins une source de lumière, la source de lumière du dispositif d'éclairage (5) mesurant pouvant être mise en service pour émettre de la lumière et pour mesurer la lumière incidente et le véhicule automobile (1) possédant en outre un dispositif de commande (10), qui est conçu pour évaluer les données de mesure de la source de lumière déterminées en mode de mesure, le dispositif de commande (10) étant configuré pour déterminer, à partir des données de mesure, une information de luminosité ambiante qui décrit une luminosité ambiante autour du véhicule automobile (1) et pour commander au moins un système de véhicule (20) en utilisant l'information de luminosité ambiante, le véhicule automobile (1) possédant au moins deux dispositifs d'éclairage (5) mesurant disposés à des positions différentes sur le véhicule automobile (1) et/ou orientés dans des directions différentes, les dispositifs d'éclairage (5) mesurant comportant un phare avant (2) et un feu arrière (3) du véhicule automobile (1) ;
**caractérisé en ce**
**que** le dispositif de commande (10) est configuré pour un examen d'ensemble des données de mesure des dispositifs d'éclairage (5) mesurant lors de la détermination de l'information de luminosité ambiante, le dispositif de commande (10) étant configuré pour tenir compte d'une évolution dans le temps (11, 12, 15, 16) des données de mesure de la source de lumière du dispositif d'éclairage (5) mesurant lors de la détermination de l'information de luminosité ambiante.

2. Véhicule automobile selon la revendication 1,
**caractérisé en ce**
**que** la source de lumière est une diode électroluminescente (9).

3. Véhicule automobile selon la revendication 1 ou 2, **caractérisé en ce**
**que** le dispositif de commande (10) est en outre configuré pour tenir compte d'une orientation de la source de lumière du dispositif d'éclairage (5) mesurant et/ou de la lumière émise par la ou une source de lumière supplémentaire du dispositif d'éclairage (5) mesurant lors de la détermination de l'information de luminosité ambiante.

4. Véhicule automobile selon l'une des revendications précédentes,
**caractérisé en ce**
**que** le dispositif de commande (10) est configuré pour évaluer l'évolution dans le temps (11, 12, 15, 16) des données de mesure en vue de la détection d'entrées de tunnel et/ou de sorties de tunnel et/ou en vue de l'évaluation statistique des données de mesure dans une fenêtre temporelle comportant plusieurs instants de mesure.

5. Véhicule automobile selon l'une des revendications précédentes,
**caractérisé en ce**
**que** les au moins deux dispositifs d'éclairage (5) mesurant possèdent en plus au moins un dispositif d'éclairage mesurant avec une orientation latérale et/ou **en ce qu'**au moins deux des plusieurs dispositifs d'éclairage (5) mesurant présentent des positions espacées dans la direction longitudinale du véhicule automobile et/ou **en ce que** le dispositif de commande (10), lors de l'examen d'ensemble, est configuré en vue de vérifier la plausibilité réciproque des données de mesure de différents dispositifs d'éclairage (5) mesurant pour ce qui concerne la luminosité ambiante.

6. Véhicule automobile selon l'une des revendications précédentes,
**caractérisé en ce**
**que** le dispositif de commande (10), lors la détection d'entrées de tunnel et de sorties de tunnel, est configuré pour utiliser une corrélation des évolutions dans le temps (11, 12, 15, 16) pour différents dispositifs d'éclairage (5) mesurant et/ou pour tenir compte de la position et/ou de l'orientation du dispositif d'éclairage (5) mesurant.

7. Véhicule automobile selon l'une des revendications précédentes,
**caractérisé en ce**
**que** le système de véhicule (20), qui est commandé en fonction de l'information de luminosité ambiante, est un phare avant (2) du véhicule automobile (1) comprenant un système d'éclairage (21) comprenant au moins une partie des dispositifs d'éclairage (5) du véhicule automobile (1), pour lequel le dispositif de commande (10) réalise une commutation des feux de route en utilisant l'information de luminosité ambiante.

8. Procédé pour faire fonctionner un véhicule automobile (1) selon l'une des revendications précédentes, des données de mesure décrivant la lumière incidente étant capturées dans un mode de mesure avec la source de lumière d'au moins l'un des dispositifs d'éclairage (5) mesurant et le dispositif de commande (10) déterminant, à partir des données de mesure, une information de luminosité ambiante qui décrit la luminosité ambiante autour du véhicule (1) et commandant au moins un système de véhicule (20) en utilisant l'information de luminosité ambiante, le dispositif de commande (10) observant les données de mesure des dispositifs d'éclairage (5) mesurant lors de la détermination de l'information de luminosité ambiante dans un examen commun et tenant compte d'une évolution dans le temps (11, 12, 15, 16) des données de mesure des sources de lumière des dispositifs d'éclairage (5) mesurant lors de la détermination de l'information de luminosité ambiante.
